# EUROPÄISCHE PATENTSCHRIFT

(11) **EP 2 132 815 B1**
(45) Veröffentlichungstag und Bekanntmachung des Hinweises auf die Patenterteilung: **11.05.2011**
(21) Anmeldenummer: 08717369.6
(22) Anmeldetag: 04.03.2008
(51) Int. Cl.: H01M 8/02

(54) **BRENNSTOFFZELLE**
FUEL CELL
CELLULE DE PILE À COMBUSTIBLE

(30) Priorität: 08.03.2007 EP 07004799
(43) Veröffentlichungstag der Anmeldung: 16.12.2009
(73) Patentinhaber: Siemens Aktiengesellschaft, 80333 München (DE)
(72) Erfinder: MATTEJAT, Arno, 91056 Erlangen (DE); MEHLTRETTER, Igor, 91054 Buckenhof (DE)
(86) Internationale Anmeldenummer: PCT/EP2008/052606
(87) Internationale Veröffentlichungsnummer: WO 2008/107434

(56) Entgegenhaltungen:
- WO-A-01/41239
- WO-A-03/081703
- JP-A- 1 105 474
- JP-A- 60 243 974
- US-A1- 2004 151 970

## Beschreibung

Die Erfindung betrifft eine Brennstoffzelle mit einem zwischen zwei Plattenelementen angeordneten Gasraum, wobei eines der Plattenelemente Erhebungen zum Abstützen des Plattenelements am anderen Plattenelement in einer regelmäßigen Gitterstruktur aufweist, zwischen denen ein Netz von den Gasraum durchziehenden Gaskanälen verläuft, wobei die Erhebungen maximal dreimal so lang wie breit sind.

In einer Brennstoffzelle reagieren Wasserstoff (H₂) und Sauerstoff (O₂) an einem Elektrolyten unter Abgabe von Wärme zu elektrischer Energie und Produktwasser, das - zusammen mit auskondensiertem Befeuchtungswasser - aus der Brennstoffzelle ausgetragen werden muss. Dies geschieht durch Ausblasen des Wassers mit überschüssigem Betriebsgas aus der Brennstoffzelle, weshalb ihr mehr Betriebsgas zugeführt wird, als sie für die Reaktion benötigt.

Die aktive Membrane und die sie umgebenden Elektroden einer PEM-Brennstoffzelle (Proton Exchange Membrane oder Polymer Elektrolyt Membrane) müssen sowohl auf der Anodenseite als auch auf der Kathodenseite gleichmäßig mit Betriebsgasen versorgt werden, um eine über die gesamte aktive Fläche möglichst gleichmäßige Zellaktivität zu erhalten. Bei hohen Leistungsdichten führen örtlich ungleichmäßige Aktivitäten zu lokal erhöhten Temperaturen und möglichen Schäden an der Membrane und den Elektroden.

Der Eintritt und Austritt der beiden Betriebsgase in eine Brennstoffzelle wird durch diskrete Kanäle realisiert, deren Geometrie und Position relativ zu den aktiven Flächen durch konstruktive Rahmenbedingungen nicht immer optimal zu gestalten ist. Daher kommt es in den beiden Gasräumen der Brennstoffzelle zur Ausprägung von Bereichen, die gut durchströmt werden und bei denen der Wasserabtransport gut erfolgt, und anderen Bereichen, so genannten Strömungsschatten, in denen die Strömung nur schwach ausgeprägt ist und das Wasser nicht befriedigend abtransportiert wird. In ungünstigen Fällen kann es durch eingelagerte Wassertropfen zu einer Blockade der Zellfunktion in solchen Strömungsschatten kommen.

In Brennstoffzellen, die mit Betriebsgasen mit inerten Anteilen betrieben werden, wie Reformergas oder Luft, bilden sich in den schlecht durchströmten Bereichen Inertgaspolster aus, die dort lokal die Leistungsfähigkeit der aktiven Komponenten herabsetzen. Die Brennstoffzelle wird dort mit einem Gas betrieben, das eine niedrige Nutzgaskonzentration hat.

Zur Lösung dieses Problems schlägt die US 2004/0151970 A1 vor, anstelle eines größeren Gasraums eine Struktur aus vielen nebeneinander liegenden, schlangenlinienförmigen Gaskanälen vorzusehen. Hierdurch entsteht jedoch ein hohes Gasdruckgefälle in der Brennstoffzelle.

Aus der DE 103 00 068 A1 ist eine Brennstoffzelle bekannt, bei der die Gasräume mit länglichen Gasleitelementen versehen sind. Diese leiten die Betriebsgase von einem Gaseinlass zu einem Gasauslass der Gasräume in der Weise, dass sie besonders ansonsten schlecht durchströmte Bereiche durchströmen.

Aus der WO 03/081703 A2 ist es bekannt, Gasräume feingliedrig zu verzweigen, um eine gleichmäßige Durchströmung der Brennstoffzelle zu erreichen.

Es ist eine Aufgabe der vorliegenden Erfindung, eine Brennstoffzelle anzugeben, bei der die Membran-Elektrolyt-Einheit örtlich besonders gleichmäßig mit Betriebsgas überströmt werden kann.

Diese Aufgabe wird durch eine Brennstoffzelle der eingangs genannten Art gelöst, bei der die Erhebungen zwischen sich erste Gaskanäle in einem mehrere Erhebungen umfassenden ersten Bereich des Gasraums und großvolumigere zweite Gaskanäle in einem mehrere Erhebungen umfassenden zweiten Bereich des Gasraums bilden. Durch die hierdurch erhaltene Variation der Strömungsquerschnitte der Gaskanäle können die Gasströme durch unterschiedliche Strömungswiderstände der Gaskanäle gelenkt werden.

Die Erfindung geht hierbei von der Überlegung aus, dass eine Strömungslenkung entlang durchgehender Strömungsbarrieren an deren Enden oder insbesondere Knicken zu Wirbeln und Turbulenzen führt, welche ihrerseits wieder Strömungsschatten bilden. Daher ist eine Strömungslenkung durch eine Vielzahl von einander getrennter und einzeln umströmter Erhebungen günstiger, da diese eine gleichmäßigere Strömung ausbilden können.

Durch die örtliche Variation der Erhebungen kann das von Betriebsgas durchströmte Kanalgesamtvolumen des zweiten Bereichs größer sein als das durchströmte Kanalgesamtvolumen des ersten Bereichs, wodurch ein geringerer Strömungswiderstand realisiert werden kann. Der zweite Bereich weist somit ein größeres Kanalgesamtvolumen auf als der erste Bereich. In einer anderen Ausgestaltung kann der zweite Bereich eine Mehrzahl von Kanälen aufweisen, die jeweils an mehreren Erhebungen vorbeiführen und deren Kanalvolumen jeweils größer ist als jeweils das Kanalvolumen gleichartiger Kanäle des ersten Bereichs, die insbesondere die großvolumigsten Kanäle des ersten Bereichs sind.

Durch die Gestaltung des Strömungswiderstands mit Hilfe der Größe des Kanalvolumens bzw. Kanalgesamtvolumens kann eine Lenkung von Betriebsgas in eine Vorzugsrichtung, also eine Hauptströmungsrichtung, in die der Hauptteil des Betriebsgases strömt, erreicht werden kann. Von einer vollständigen Strömungsbarriere, entlang derer das Betriebsgas geleitet wird, kann hierbei abgesehen werden, so dass das Betriebsgas vorteilhafterweise in beiden Bereichen stets von jedem Punkt zu jedem Punkt des Kanalnetzes - also beispielsweise in beide Koordinatenrichtungen eines zweidimensionalen Strömungsmusters - strömen kann.

Durch die regelmäßige Gitterstruktur der Erhebungen kann eine großflächig gleichmäßige Strömung erreicht werden. Die Gitterstruktur ist hierbei durch eine zweidimensionale, sich regelmäßig wiederholende Anordnung der Erhebungen gebildet, so dass in beide Raumrichtungen - in beispielsweise kartesischen oder Polarkoordinaten - eine regelmäßige Aufeinanderfolge von Erhebungen gegeben ist. Die ideale Gitterstruktur kann hierbei durch die geometrischen Mittelpunkte der Erhebungen gebildet werden.

In einer vorteilhaften Ausgestaltung der Erfindung sind die Erhebungen kompakt ausgeführt und maximal dreimal so lang wie breit, insbesondere nur maximal doppelt so lang wie breit ausgeführt. Hierdurch kann eine gleichmäßige Strömung um die Erhebungen durch die Bereiche erfolgen. Zweckmäßigerweise sind die Erhebungen um einen Erhebungsmittelpunkt symmetrisch geformt, beispielsweise kreisförmig, oval, hexagonal oder quadratisch. Die Symmetrie ist hierbei vorteilhafterweise zweidimensional, so dass die Erhebungen grundsätzlich so lang wie breit sind. Die Erhebungen können wirbelarm umströmt werden, insbesondere wirbelfrei, wenn die Erhebungen quer zu den Gaskanälen kantenfrei sind.

Eine vorteilhafte Lenkung der Gasströme in gewünschte Bereiche des Gasraums kann erzielt werden, wenn der Gasraum einen Gaseinlass und einen Gasauslass aufweist, wobei ein Strömungswiderstand vom Gaseinlass zum Gasauslass entlang zweiter Gaskanäle pro Strecke im Mittel kleiner ist als durch erste Gaskanäle. Als Strömungswiderstand ist der Strömungswiderstand des Betriebsgases zu sehen, insbesondere gemessen bei gleicher Strömungsgeschwindigkeit des Betriebsgases durch die zweiten wie durch die ersten Gaskanäle.

Zweckmäßigerweise sind der Gasraum und die darin vom Betriebsgas zu überströmende aktive Fläche der Brennstoffzelle rechteckig, wodurch die Brennstoffzelle kompakt ausgeführt werden kann.

Ist der erste Bereich ein Innenbereich und der zweite Bereich ein Randbereich des Gasraums, so kann eine bevorzugte Lenkung der Gasströmung in den Randbereich erreicht werden, so dass einer Ausbildung eines Strömungsschattens in einem Randbereich entgegengewirkt wird. Der Randbereich ist insbesondere ein Eckbereich, in dem ansonsten eine große Neigung zur Ausbildung eines Strömungsschattens bestehen würde.

Da sich ein Strömungsschatten in der Regel in einem Randbereich eines Gasraums bildet, ist eine Anordnung des zweiten Bereichs rings umlaufend im Randbereich vorteilhaft, wobei der erste Bereich vollständig vom zweiten Bereich umgeben ist.

In einer anderen Ausführungsform ist die Anordnung der Bereiche so gewählt, dass der erste Bereich eine vom gesamten Betriebsgasstrom durch den Gasraum zu überströmende Barriere bildet. Somit kann der Gasstrom dazu gebracht werden, sich vor dem Überströmen über bzw. durch die Barriere zunächst im zweiten Bereich zu verteilen, wodurch eine gleichmäßige Betriebsgasverteilung im Gasraum erreicht werden kann. Die Barriere kann hierbei selbst wieder in Bereiche unterschiedlichen Strömungswiderstands analog zu ersten und zweiten Bereich aufgeteilt sein.

Eine Barriere oder Drossel kann einfach gebildet werden, wenn sich der erste Bereich quer durch den Gasraum von einem Randbereich zu einem gegenüberliegenden Randbereich erstreckt. Vor und entlang der Drossel kann sich das Betriebsgas zunächst im zweiten Bereich mit den weiteren Gaskanälen verteilen. Nach der Verteilung wird die Drossel großflächig durchströmt, so dass sich eine breit verteilte Strömung und damit eine gleichmäßige Überströmung der aktiven Fläche bilden.

Vorteilhafterweise schließt sich stromabwärts an die Barriere ein dritter Bereich an, in dem die Erhebungen Gaskanäle ausbilden, deren Volumen zwischen dem in den ersten beiden Bereichen liegt und insbesondere stromabwärts daran ein zweiter Bereich. Mittels des hierdurch ausgebildeten Gradienten des Strömungswiderstrands wird der Gasstrom in Richtung des großvolumigeren dritten und dann zweiten Bereichs gezogen, so dass einer unerwünschten Quer- oder Diagonalströmung entgegengewirkt wird.

Eine örtlich gleichmäßige Überströmung der aktiven Fläche der Brennstoffzelle kann weiter verbessert werden, wenn die Bereiche so zueinander angeordnet sind, dass die Strömungswiderstände in den Bereichen auf eine Z-förmige Strömung durch den Gasraum hinwirken. Einer unerwünschten Quer- oder Diagonalströmung kann insoweit entgegengewirkt werden, dass sie abgeschwächt, aufgehoben oder sogar tatsächlich als Z-förmige Strömung ausgeprägt ist.

Die Verschiedenheit der Gaskanäle im ersten und zweiten Bereich hinsichtlich ihres Volumens bzw. Strömungswiderstands kann in einer vorteilhaften Ausführungsform der Erfindung durch eine Variation der Größe der Erhebungen gebildet sein. Es kann die Breite der freien Durchtrittsfläche, also die Breite eines Gaskanals bzw. die Größe des Gesamtströmungsquerschnitts aller Gaskanäle im Bereich, variiert werden.

Eine weitere einfach realisierbare Möglichkeit zur Variation des Gesamtströmungsquerschnitts bzw. des Gesamtströmungswiderstands zwischen den Bereichen besteht darin, die Verschiedenheit der Gaskanäle im ersten und zweiten Bereich durch eine Variation der Form der Erhebungen zu bilden. Sie wirkt sich auf die Form der Gaskanäle aus. Es kann in einfacher Weise Einfluss auf Strömungseigenschaften der Gaskanäle genommen werden.

Des Weiteren kann die Verschiedenheit der Gaskanäle im ersten und zweiten Bereich durch eine Variation der Gitterstruktur gebildet sein. Hierdurch kann die Anzahl der nebeneinander liegenden Gaskanäle pro Strecke quer zu den Gaskanälen und hiermit der Strömungswiderstand der Gesamtheit der Gaskanäle in diesem Bereich auf einfache Weise variiert werden. Die Gitterstruktur kann durch eine Variation der Gitterkonstanten erzielt werden. Sie wirkt sich auf den Abstand der Gaskanäle zueinander aus und damit auf die Größe eines Gesamtströmungsquerschnitts in den Bereichen. Etwas aufwendiger ist eine Variation der Form der Gitterstruktur, beispielsweise von einer hexagonalen in eine quadratische Struktur, wobei hiermit eine feine Richtungsvariation der Gaskanäle erreichbar ist.

Eine Variation der Form der Erhebungen kann dadurch realisiert werden, dass Böschungswinkel der Gaskanäle im ersten und zweiten Bereich unterschiedlich sind. Es kann eine sehr gleichmäßige Strömungsgeschwindigkeit im Gaskanal mit einem steilen Böschungswinkel und eine in der unmittelbaren Nähe der Erhebungen langsame, Turbulenzen entgegenwirkende Strömung durch einen flacher Böschungswinkel erreicht werden. Der Böschungswinkel ist hierbei insbesondere der maximale Böschungswinkel eines Gaskanals an einer Erhebung.

Die Erfindung wird anhand von Ausführungsbeispielen näher erläutert, die in den Zeichnungen dargestellt sind.

Es zeigen:
- FIG 1: einen Gasraum einer Brennstoffzelle mit drei Berei- chen, die Gaskanäle unterschiedlicher Strömungswi- derstände aufweisen,
- FIG 2: eine Draufsicht auf Gaskanäle bildende Erhebungen,
- FIG 3: eine Draufsicht auf engere Gaskanäle bildende Erhe- bungen,
- FIGen 4-9: Schnitte durch Plattenelemente mit verschieden ge- formten Erhebungen und zwischen ihnen gebildeten verschiedenen Gaskanälen,
- FIG 10: einen Gasraum mit sechs Bereichen mit Gaskanälen mit fünf unterschiedlichen Strömungswiderständen und
- FIG 11: einen Gasraum mit einer Vielzahl von Bereichen mit Gaskanälen mit sechs unterschiedlichen Strömungswi- derständen.

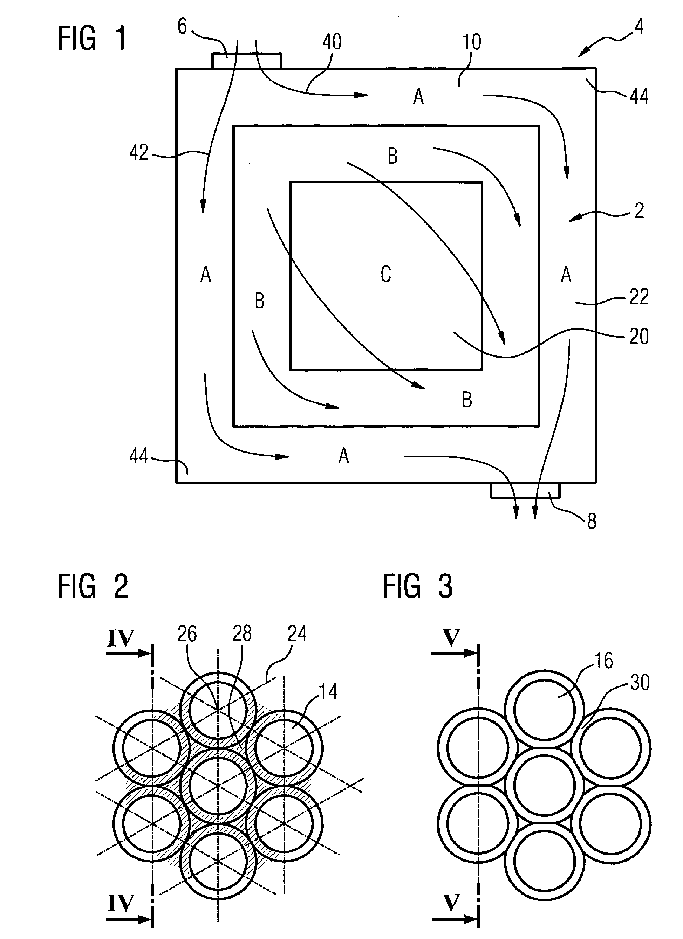

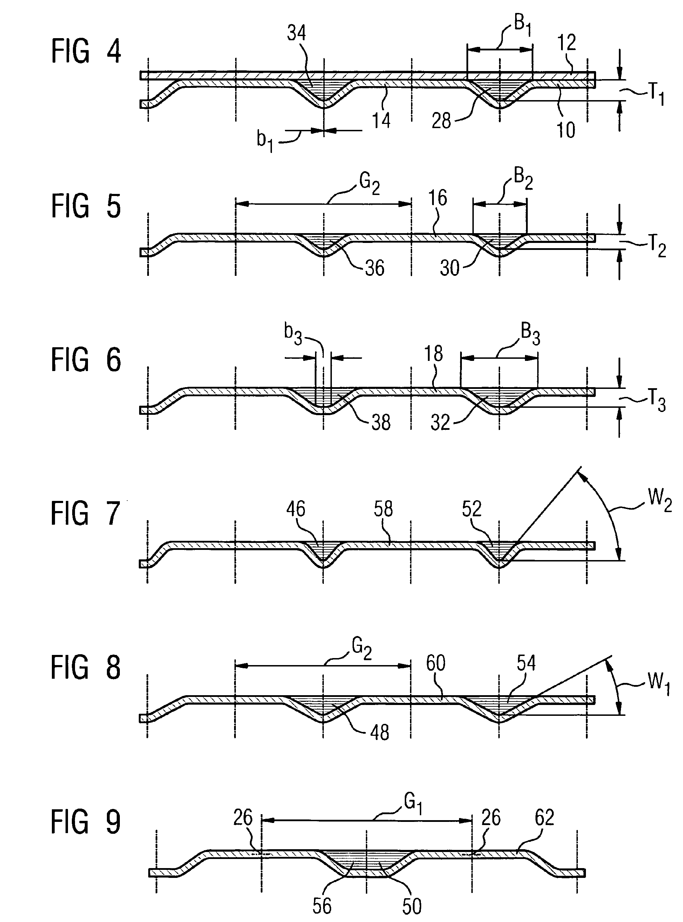

FIG 1 zeigt einen Gasraum 2 einer Brennstoffzelle 4 in einer schematischen Draufsicht. Mit dem Gasraum 2 verbunden sind ein Gaseinlass 6 zum Einleiten von Betriebsgas in den Gasraum 2 und ein Gasauslass 8 zum Ausleiten des im Gasraum 2 nicht verbrauchten Betriebsgases und Wasser aus dem Gasraum 2. Der Gasraum 2 wird auf seinen beiden Flachseiten begrenzt durch zwei Plattenelemente 10, 12, die in FIG 4 in einer Schnittdarstellung gezeigt sind. Das Plattenelement 10 ist metallisch und Teil einer zwei Brennstoffzellen 4 voneinander trennenden Bipolarplatte. Das Plattenelement 12 ist eine Elektrode, beispielsweise eine Anode.

Während das Plattenelement 12 im wesentlich flach und ohne Erhebungen ist, sind in das Plattenelement 10 eine Vielzahl von Erhebungen 14, 16, 18 eingeprägt, die in den FIGen 2 und 3 in einer Draufsicht und in den FIGen 4-6 in einer Schnittansicht dargestellt sind. An den Erhebungen 14, 16, 18 stützen sich die beiden Plattenelemente 10, 12 aneinander ab.

Das Plattenelement 10 - und damit der Gasraum 2 - ist in drei Bereiche A, B, C eingeteilt, in denen die Erhebungen 14, 16, 18 jeweils unterschiedlich groß sind. Im Bereich C in einem Innenbereich 20 des Gasraums 2 ist das Plattenelement 10 mit den Erhebungen 16 versehen, in einem Randbereich 22 mit den Erhebungen 18 und dazwischen mit den Erhebungen 14. Sämtliche Erhebungen 14, 16, 18 sind in einer regelmäßigen, hexagonalen Gitterstruktur 24 angeordnet, die in allen drei Bereichen A, B, C vollständig gleich ist. Erhebungsmittelpunkte 26 der Erhebungen 14, 16, 18 sind hierbei so angeordnet, dass sie die Gitterstruktur 24 bilden, wie in FIG 2 dargestellt ist. Die Erhebungsmittelpunkte 26 sind hierbei die geometrischen Mittelpunkte der um sie symmetrisch geformten kreisförmigen Erhebungen 14, 16, 18.

Zwischen sich bilden die Erhebungen 14, 16, 18 ein Netz von den Gasraum 2 durchziehenden Gaskanälen 28, 30, 32, die den Gaseinlass 6 mit dem Gasauslass 8 verbinden. Zur Verdeutlichung ist das Netz der Gaskanäle 28 zwischen den Erhebungen 14 in der FIG 2 schraffiert dargestellt. Durch die unterschiedliche Größe der Erhebungen 14, 16, 18 sind die Gaskanäle 28, 30, 32 an ihren engsten Stellen mit unterschiedlichen Strömungsquerschnitten 34, 36, 38 gebildet, die zur Verdeutlichung in den FIGen 4-6 schraffiert dargestellt sind. So ist beispielsweise dadurch, dass der Strömungsquerschnitt 36 der Gaskanäle 30 im Bereich C enger ist als der Strömungsquerschnitt 38 der Gaskanäle 32 im Bereich A der Strömungswiderstand des Gasraums 2 im Bereich C pro Strömungsstrecke höher als im Bereich A pro gleicher Strömungsstrecke.

Durch den unterschiedlichen Strömungswiderstand des Gasraums 2 in den Bereichen A, B, C wird das durch den Gaseinlass 6 einströmende Betriebsgas in eine Vorzugsrichtung 40, 42 entlang des Bereichs A und damit entlang des Randbereichs 22 gelenkt, so dass sich in den beiden gegenüberliegenden, entfernt von dem Gaseinlass 6 und dem Gasauslass liegenden Eckbereichen 44 keine Strömungsschatten ausbilden. Im Bereich C ist der Strömungswiderstand am größten, so dass hier, trotz der im Bereich C verlaufenden kürzesten Strecke einer Gasströmung vom Gaseinlass 6 zum Gasauslass 8, pro Fläche nur gleich viel Betriebsgas strömt wie im Bereich A. Der Bereich B liegt hinsichtlich des Strömungswiderstands etwa in der Mitte zwischen den Bereichen A, C. Der Strömungswiderstand vom Gaseinlass 6 zum Gasauslass 8 entlang der Gaskanäle 32 ist pro Strecke im Mittel kleiner als durch die Gaskanäle 28, 30. Der Strömungswiderstand vom Gaseinlass 6 zum Gasauslass 8 entlang der Gaskanäle 32 ist insgesamt im Wesentlichen so groß wie auf dem kürzesten Weg vom Gaseinlass 6 zum Gasauslass 8 entlang der Gaskanäle 28, 30, 32.

Wie in den FIGen 4-6 zu sehen ist, ist die Variation des Volumens der Gaskanäle 28, 30, 32 durch eine Variation der Größe der kreisförmigen Erhebungen 14, 16, 18 gebildet. In FIG 4 sind die Gaskanäle 28 V-förmig mit der maximalen Breite B₁, der Tiefe T₁ und der Kanalbodenbreite b₁ von Null. Ebenfalls V-förmig und mit gleichem Böschungswinkel sind die Gaskanäle 30 ausgeführt, jedoch mit kleiner Tiefe T₂ und Breite B₂. Die Gaskanäle 32 sind analog zu den Gaskanälen 28 gebildet, jedoch am Kanalboden etwas auseinander gezogen, so dass der Kanalboden die Breite b₃ aufweist. Die Breite B₃ und damit das Volumen des Gaskanals 32 an der engsten Stelle ist von allen Gaskanälen 28, 30, 32 am größten und die Tiefe T₃ ist gleich groß wie die Tiefe T₁.

Die Auswirkung der Variationen der Kanalvolumen auf die Strömungswiderstände bzw. den Druckabfall innerhalb eines Gasraums wird anhand der folgenden Tabelle verdeutlicht. Gemessen wurde der Druckabfall an drei Gasräumen mit den Abmessungen 70 mm x 70 mm, die jeweils mit einem Plattenelement 10 mit nur einer Art der Erhebungen 14, 16, 18, also jeweils nur einer Art Bereich A, B, C versehen waren.

| | **G₂-Bᵢ** | **34, 36, 38** | **%** | **Druckabfall O₂** | **%** | **Druckabfall H₂** | **%** |
|---|---|---|---|---|---|---|---|
| **Bereich A** | 3,9 mm | 58 mm² | 135 | 0,5 mbar | 80 | 0,7 mbar | 78 |
| **Bereich B** | 4,2 mm | 43 mm² | 100 | 0,6 mbar | 100 | 0,9 mbar | 100 |
| **Bereich C** | 4,4 mm | 32 mm² | 75 | 0,8 mbar | 132 | 1,1 mbar | 122 |

Während der Druckabfall im Gasraum mit lediglich den größten Erhebungen 16 sauerstoffseitig 0,8 mbar und wasserstoffseitig 1,1 mbar betrug, betrug er im Gasraum mit lediglich den kleinsten Erhebungen 18 nur 0,5 mbar bzw. 0,7 mbar. Es wird daher eine deutlich widerstandsärmere Durchströmung des Bereichs A denn des Bereichs C erreicht.

Andere Variationsmöglichkeiten der engsten Strömungsquerschnitte 46, 48, 50 von Gaskanälen 52, 54, 56 sind in den FIGen 7-9 dargestellt. So sind die in FIG 8 dargestellten Gaskanäle 54 zwischen Erhebungen 60 durch einen flacheren Böschungswinkel W₁ gekennzeichnet, bei gleicher Tiefe, und sind somit großvolumiger als die Gaskanäle 52 zwischen Erhebungen 58 mit dem steileren Böschungswinkel W₂. Auf diese Weise hat ein Kanalnetz aus den Gaskanälen 54 somit einen geringeren Strömungswiderstand pro durchströmte Strecke bzw. pro Bereichsfläche als ein Kanalnetz aus Gaskanälen 52.

In FIG 9 sind Erhebungen 62 weiter beabstandet voneinander angeordnet, so dass eine Gitterkonstante G₁ bei beispielsweise gleicher hexagonaler Gitterstruktur weiter ist als die Gitterkonstante G₂ in den FIGen 4-8.

Als weitere Variationsmöglichkeiten können die Formen von Erhebungen und/oder die Gitterstruktur verändert werden, so dass die Kanalnetzform und Weite der Gaskanäle bzw. die Kanalnetzform und Kanaldichte veränderbar sind. Auf diese und die wie oben beschriebenen Weisen können sowohl der Strömungswiderstand pro Strecke durch einen Bereich A, B, C als auch ein Strömungsverhalten gezielt auf gewünschte Eigenschaften der Brennstoffzelle 4 eingestellt werden.

Zwei weitere Beispiele von Gasräumen 64, 66 sind in den FIGen 10 und 11 gezeigt. Die nachfolgende Beschreibung beschränkt sich im Wesentlichen auf die Unterschiede zum Ausführungsbeispiel in FIG 1, auf das bezüglich gleich bleibender Merkmale und Funktionen verwiesen wird. Im Wesentlichen gleich bleibende Bauteile sind grundsätzlich mit den gleichen Bezugszeichen beziffert.

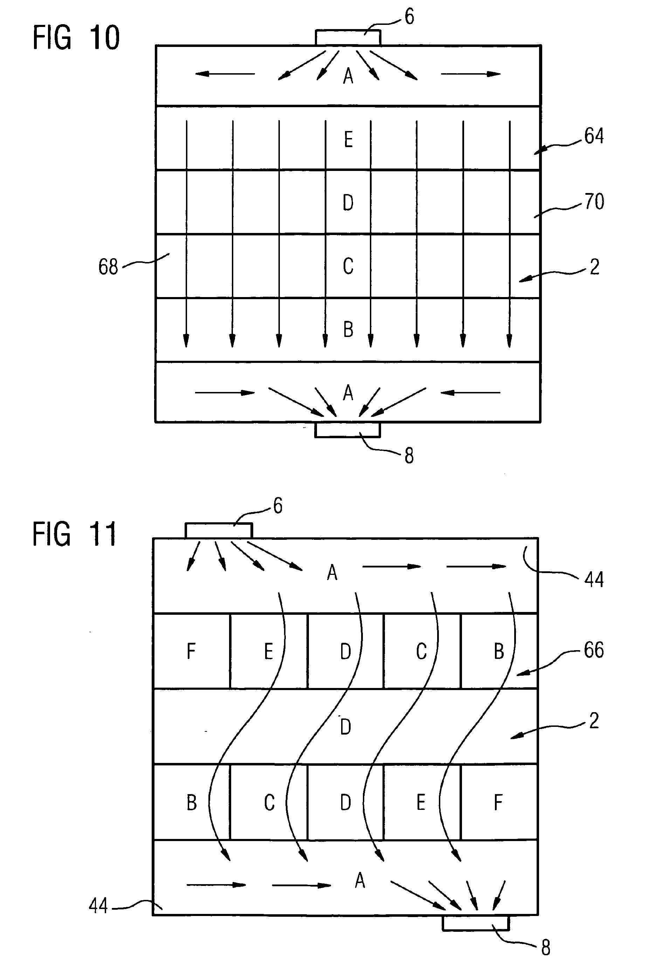

Der Gasraum 64 in FIG 10 ist in sechs streifenförmige Bereiche A-E aufgeteilt, die jeweils quer durch den Gasraum 2 von einem Randbereich 68 zum gegenüberliegenden Randbereich 70 verlaufen. Der Strömungswiderstand der Bereiche A-E pro durchströmter Strecke ist so eingestellt, dass der Strömungswiderstand des Bereichs A am kleinsten, des Bereichs B größer, des Bereichs C noch größer, des Bereichs D wiederum größer und des Bereichs E am größten ist.

Der eingangsseitige Bereich A begünstigt mit seinem geringen Strömungswiderstand eine gleichmäßige Verteilung des Betriebsgases über die gesamte Breite des quadratischen Gasraums 2. Der Bereich E stellt hierbei eine nur mit größerem Strömungswiderstand zu durchströmende Drossel bzw. Barriere dar, entlang derer sich der größte Teil des Betriebsgases zunächst ausbreitet. Nach dem Verteilen strömt das Betriebsgas insgesamt durch den Bereich E und wird durch den Gradient des Strömungswiderstands vom Bereich E bis zum ausgangsseitigen Bereich A im Wesentlichen gerade durch die Bereiche E-B gelenkt. Hierbei strömt das Betriebsgas auch zufrieden stellend entlang der Randbereiche 68, 70 zum Gasauslass 8. Im ausgangsseitigen Bereich A geringen Strömungswiderstands kann sich das Betriebsgas nur wenig gehemmt zum Gasauslass 8 hin bewegen und insbesondere kathodenseitig das im Gasraum 2 entstandene Produktwasser mit abführen.

Bei der in FIG 10 dargestellten Aufteilung der Bereiche lässt es sich nicht ganz verhindern, dass ein gewisser diagonaler Strömungsanteil vom Gaseinlass 6 zum Gasauslass 8 im Gasstrom durch die Bereiche E-B erhalten bleibt. Um diesen zu verringern, zu unterbinden oder sogar eine leicht Z-förmige Strömung zu erhalten ist eine Aufteilung von Bereichen A-F wie in FIG 11 dargestellt geeignet. Die Bereiche A sind wie im Beispiel aus FIG 10 ausgeführt. Zwei Streifen von je fünf entgegengesetzt zueinander angeordneten Bereichen B-F bilden jedoch einen Gradienten des Strömungswiderstands im Wesentlichen quer zur Gasströmung. Hierdurch wird der Gasstrom quer zu seiner Strömungsrichtung in Richtung einer Z-förmigen Strömung so abgelenkt, dass die unerwünschte Diagonalströmung verringert, vermieden oder sogar eine Z-förmige Strömung wie in FIG 11 dargestellt erreicht wird.

Auf diese Weise kann ein Strömungsschatten in den Eckbereichen 44 wirksam vermieden werden. Durch den ausgangsseitigen Bereich A mit geringem Strömungswiderstand wird das Produktwasser effektiv ausgetragen, so dass eine Blockade von Zellbereichen und eine Korrosion durch ionische Anreicherungen im Wasser vermieden werden. Außerdem wird durch die Maßnahmen in den Ausführungsbeispielen eine gleichmäßige Konzentration von Inertgasen über die gesamte aktive Fläche des Gasraums 2 erreicht und eine Bildung von Strömungsschatten, Totgebieten und Wirbeln vermieden.

## Patentansprüche

1. Brennstoffzelle (4) mit einem zwischen zwei Plattenelementen (10, 12) angeordneten Gasraum (2), wobei eines der Plattenelemente (10) Erhebungen (14, 16, 18, 58, 60, 62) zum Abstützen des Plattenelements (10) am anderen Plattenelement (12) in einer regelmäßigen Gitterstruktur (24) aufweist, zwischen denen ein Netz von den Gasraum (2) durchziehenden Gaskanälen (28, 30, 32, 52, 54, 56) verläuft, wobei die Erhebungen maximal dreimal so lang wie breit sind,
**dadurch gekennzeichnet, dass** die Erhebungen (14, 16, 18, 58, 60, 62) zwischen sich erste Gaskanäle (28, 30, 52, 54) in einem mehrere Erhebungen (16, 18, 58, 60) umfassenden ersten Bereich (B-F) des Gasraums (2) und großvolumigere zweite Gaskanäle (28, 32, 54, 56) in einem mehrere Erhebungen (14, 18, 60, 62) umfassenden zweiten Bereich (A-E) des Gasraums (2) bilden.

2. Brennstoffzelle (4) nach Anspruch 1,
**dadurch gekennzeichnet, dass** die Erhebungen (14, 16, 18, 58, 60, 62) um einen Erhebungsmittelpunkt (26) symmetrisch geformt sind.

3. Brennstoffzelle (4) nach Anspruch 1 oder 2,
**dadurch gekennzeichnet, dass** der Gasraum (2) einen Gaseinlass (6) und einen Gasauslass (8) aufweist und ein Strömungswiderstand vom Gaseinlass (6) zum Gasauslass (8) entlang zweiter Gaskanäle (28, 32, 54, 56) pro Strecke im Mittel kleiner ist als durch erste Gaskanäle (28, 30, 52, 54).

4. Brennstoffzelle (4) nach einem der vorhergehenden Ansprüche, **dadurch gekennzeichnet, dass** der erste Bereich (B-F) ein Innenbereich (20) und der zweite Bereich (A, B) ein Randbereich (22, 68, 70) des Gasraums (2) ist.

5. Brennstoffzelle (4) nach einem der vorhergehenden Ansprüche, **dadurch gekennzeichnet, dass** das Plattenelement (10) mit den Erhebungen (14, 16, 18, 58, 60, 62) zwei sich einander gegenüberliegende Randbereiche (68, 70) aufweist und der erste Bereich (B-E) quer durch den Gasraum (2) von einem der Randbereiche (68) zu dem gegenüberliegenden Randbereich (70) reicht.

6. Brennstoffzelle (4) nach einem der vorhergehenden Ansprüche, **dadurch gekennzeichnet, dass** die Bereiche (A-F) so zueinander angeordnet sind, dass die Strömungswiderstände in den Bereichen (A-F) auf eine Z-förmige Strömung durch den Gasraum (2) hinwirken, indem ein erster Bereich (B-F) zwischen zweiten Bereichen (A-E) angeordnet ist und der erste Bereich (B-F) einen Gradienten des Strömungswiderstands quer zu einer Strömungsrichtung von die Gaskanäle (28, 30, 32, 52, 54, 56) von einem zweiten Bereich (A-E) zum ersten Bereich (B-F) und weiter zum nächsten zweiten Bereich (A-E) durchströmendem Gas bildet.

7. Brennstoffzelle (4) nach einem der vorhergehenden Ansprüche, **dadurch gekennzeichnet, dass** die Verschiedenheit der Gaskanäle (28, 30, 32, 52, 54, 56) im ersten und zweiten Bereich (A-F) durch eine Variation der Größe der Erhebungen (14, 16, 18, 58, 60, 62) gebildet ist.

8. Brennstoffzelle (4) nach einem der vorhergehenden Ansprüche, **dadurch gekennzeichnet, dass** die Verschiedenheit der Gaskanäle (52, 54, 56) im ersten und zweiten Bereich (A-F) durch eine Variation der Form der Erhebungen (58, 60, 62) gebildet ist.

9. Brennstoffzelle (4) nach einem der vorhergehenden Ansprüche, **dadurch gekennzeichnet, dass** die Verschiedenheit der Gaskanäle (28, 30, 32, 52, 54, 56) im ersten und zweiten Bereich (A-F) durch eine Variation der Gitterstruktur (24) derart gebildet ist, dass die Anzahl der nebeneinander liegenden Gaskanäle (28, 30, 32, 52, 54, 56) pro Strecke quer zu den Gaskanälen (28, 30, 32, 52, 54, 56) variiert.

10. Brennstoffzelle (4) nach einem der vorhergehenden Ansprüche, **dadurch gekennzeichnet, dass** Böschungswinkel (W₁, W₂) der Gaskanäle (28, 30, 32, 52, 54, 56) im ersten und zweiten Bereich (A-F) unterschiedlich sind.

## Claims

1. Fuel cell (4) with a gas chamber (2) arranged between two plate elements (10, 12), one of the plate elements (10) having bosses (14, 16, 18, 58, 60, 62) to support the plate element (10) on the other plate element (12) in a regular grid structure (24), between which a network of gas channels (28, 30, 32, 52, 54, 56) passing through the gas chamber (2) runs, the bosses being at most three times as long as they are wide, **characterised in that** the bosses (14, 16, 18, 58, 60, 62) between them form first gas channels (28, 30, 52, 54) in a first region (B-F) of the gas chamber (2) comprising a number of bosses (16, 18, 58, 60) and larger-volume second gas channels (28, 32, 54, 56) in a second region (A-E) of the gas chamber (2) comprising a number of bosses (14, 18, 60, 62).

2. Fuel cell (4) according to claim 1,
**characterised in that** the bosses (14, 16, 18, 58, 60, 62) are formed symmetrically about a boss centre point (26).

3. Fuel cell (4) according to claim 1 or 2,
**characterised in that** the gas chamber (2) has a gas inlet (6) and a gas outlet (8) and a flow resistance from the gas inlet (6) to the gas outlet (8) along second gas channels (28, 32, 54, 56) is smaller per section in the centre than through first gas channels (28, 30, 52, 54).

4. Fuel cell (4) according to one of the preceding claims,
**characterised in that** the first region (B-F) is an inner region (20) and the second region (A, B) is an edge region (22, 68, 70) of the gas chamber (2).

5. Fuel cell (4) according to one of the preceding claims, **characterised in that** the plate element (10) with the bosses (14, 16, 18, 58, 60, 62) has two edge regions (68, 70) opposite one another and the first region (B-E) extends in a perpendicular manner through the gas chamber (2) from one of the edge regions (68) to the opposite edge region (70).

6. Fuel cell (4) according to one of the preceding claims, **characterised in that** the regions (A-F) are arranged in relation to one another in such a manner that the flow resistances in the regions (A-F) encourage a z-shaped flow through the gas chamber (2), **in that** a first region (B-F) is arranged between second regions (A-E) and the first region (B-F) forms a gradient of the flow resistance perpendicular to a flow direction of gas flowing through the gas channels (28, 30, 32, 52, 54, 56) from a second region (A-E) to the first region (B-F) and on to the next second region (A-E).

7. Fuel cell (4) according to one of the preceding claims, **characterised in that** the difference between the gas channels (28, 30, 32, 52, 54, 56) in the first and second regions (A-F) is formed by a variation in the size of the bosses (14, 16, 18, 58, 60, 62).

8. Fuel cell (4) according to one of the preceding claims, **characterised in that** the difference between the gas channels (52, 54, 56) in the first and second regions (A-F) is formed by a variation in the form of the bosses (58, 60, 62).

9. Fuel cell (4) according to one of the preceding claims, **characterised in that** the difference between the gas channels (28, 30, 32, 52, 54, 56) in the first and second regions (A-F) is formed by a variation in the grid structure (24) such that the number of adjacent gas channels (28, 30, 32, 52, 54, 56) per section perpendicular to the gas channels (28, 30, 32, 52, 54, 56) varies.

10. Fuel cell (4) according to one of the preceding claims, **characterised in that** angles of slope (W₁, W₂) of the gas channels (28, 30, 32, 52, 54, 56) in the first and second regions (A-F) are different.

## Revendications

1. Pile ( 4 ) à combustible, comprenant un espace ( 2 ) pour du gaz disposé entre deux éléments ( 10, 12 ) de plaque, dans laquelle l'un des éléments ( 10 ) de plaque a, suivant une structure ( 24 ) régulière en réseau, des surélévations ( 14, 16, 18, 58, 60, 62 ) pour l'appui de l'élément ( 10 ) de plaque sur l'autre élément ( 12 ) de plaque entre lesquelles s'étend un réseau de canaux ( 28, 30, 32, 52, 54, 56 ) pour du gaz traversant l'espace ( 2 ) pour du gaz, les surélévations étant au maximum trois fois plus longues que larges,
**caractérisée en ce que** les surélévations ( 14, 16, 18, 58, 60, 62 ) forment entre elles des premiers canaux ( 28, 30, 52, 54 ) pour du gaz dans une première zone ( B-F ) de l'espace ( 2 ) pour du gaz comprenant plusieurs surélévations ( 16, 18, 58, 60 ) et des deuxièmes canaux ( 28, 32, 54, 56 ) pour du gaz de volume plus grand dans une deuxième zone ( A-E ) de l'espace ( 2 ) pour du gaz comprenant plusieurs surélévations ( 14, 18, 60, 62 ).

2. Pile ( 4 ) combustible suivant la revendication 1,
**caractérisée en ce que** les surélévations ( 14, 16, 18, 58, 60, 62 ) sont formées symétriquement autour d'un centre ( 26 ) de surélévation.

3. Pile ( 4 ) combustible suivant la revendication 1 ou 2,
**caractérisée en ce que** l'espace ( 2 ) pour le gaz a une entrée ( 6 ) pour le gaz et une sortie ( 8 ) pour le gaz et une résistance à l'écoulement, de l'entrée ( 6 ) pour le gaz à la sortie ( 8 ) pour le gaz le long des deuxièmes canaux ( 28, 32, 54, 56 ) pour du gaz, est en moyenne par trajet plus petite que dans des premiers canaux ( 28, 30, 52, 54 ) pour du gaz.

4. Pile ( 4 ) combustible suivant l'une des revendications précédentes, **caractérisée en ce que** la première zone ( B-F ) est une zone ( 20 ) intérieure et la deuxième zone ( A, B ) est une zone ( 22, 68, 70 ) de bord pour l'espace ( 2 ) pour du gaz.

5. Pile ( 4 ) combustible suivant l'une des revendications précédentes, **caractérisée en ce que** l'élément ( 10 ) de plaque ayant les surélévations ( 14, 16, 18, 58, 60, 62 ) comporte deux zones ( 68, 70 ) de bord opposées l'une à l'autre et la première zone ( B-E ) s'étend transversalement dans l'espace ( 2 ) pour du gaz de l'une des zones ( 68 ) de bord à la zone ( 70 ) de bord opposée.

6. Pile ( 4 ) combustible suivant l'une des revendications précédentes, **caractérisée en ce que** les zones ( A-F ) sont disposées les unes par rapport aux autres de manière à ce que les résistances dans les zones ( A-F ) provoquent un écoulement en forme de Z dans l'espace ( 2 ) pour du gaz, par le fait qu'une première zone ( B-F ) est disposée entre des deuxièmes zones ( A-E ) et la première zone ( B-F ) forme un gradient de la résistance à l'écoulement transversalement à un sens d'écoulement d'un gaz passant dans les canaux ( 28, 30, 32, 52, 54, 56 ) pour du gaz d'une deuxième zone ( A-E ) à la première zone ( B-F ) et plus loin vers la deuxième zone ( A-E ) suivante.

7. Pile ( 4 ) combustible suivant l'une des revendications précédentes, **caractérisée en ce que** la différenciation des canaux ( 28, 30, 32, 52, 54, 56 ) pour du gaz dans la première et dans la deuxième zones ( A-F ) est formée par une variation de la dimension des surélévations ( 14, 16, 18, 58, 60, 62 ).

8. Pile ( 4 ) combustible suivant l'une des revendications précédentes, **caractérisée en ce que** la différenciation des canaux ( 52, 54, 56 ) pour du gaz dans la première et dans la deuxième zones ( A-F ) est formée par une variation de la forme des surélévations ( 58, 60, 62 ).

9. Pile ( 4 ) combustible suivant l'une des revendications précédentes, **caractérisée en ce que** la différenciation des canaux ( 28, 30, 32, 52, 54, 56 ) pour du gaz dans la première et dans la deuxième zones ( A-F ) est formée par une variation de la structure ( 24 ) en réseau de manière à ce que le nombre des canaux ( 28, 30, 32, 52, 54, 56 ) pour du gaz se trouvant côte à côte varie par trajet transversalement aux canaux ( 28, 30, 32, 52, 54, 56 ) pour du gaz.

10. pille ( 4 ) combustible suivant l'une des revendications précédentes, **caractérisée en ce que** des angles (W₁, W₂ ) des canaux ( 28, 30, 32, 52, 54, 56 ) pour du gaz sont différents dans la première et dans la deuxième zones ( A-F ).
